(19) Europäisches Patentamt
European Patent Office
Office européen des brevets

(11) **EP 0 582 841 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int Cl.$^6$: **C08L 27/12**
// (C08L27/12, 83:04)

(21) Anmeldenummer: **93111124.9**

(22) Anmeldetag: **12.07.1993**

(54) **Kombinationen aus Polyorganosiloxanen und doppelbindungsghaltigen Fluorkautschuken durch Si-H-Addition**

Combinations of polyorganosiloxanes and double band-containing fluororubbers through Si-H-addition

Combinaisons de polyorganosiloxanes et de caoutchoucs en polymère fluoré contenant des liaisons doubles par l'addition Si-H

(84) Benannte Vertragsstaaten:
**BE DE FR GB IT**

(30) Priorität: **24.07.1992 DE 4224559**

(43) Veröffentlichungstag der Anmeldung:
**16.02.1994 Patentblatt 1994/07**

(73) Patentinhaber: **BAYER AG**
**51368 Leverkusen (DE)**

(72) Erfinder:
- **Langstein, Gerhard, Dr.**
  **D-51515 Kürten (DE)**
- **Krüger, Ralf, Dr.**
  **D-51429 Bergisch Gladbach (DE)**
- **Alberts, Heinrich, Dr.**
  **D-51519 Odenthal (DE)**
- **Moretto, Hans-Heinrich, Dr.**
  **D-51375 Leverkusen (DE)**

(56) Entgegenhaltungen:
**DE-A- 2 519 964**      **US-A- 3 415 900**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Fluorkautschuke (FKM) auf der Basis von Vinylidenfluorid, Hexafluorpropen und gegebenenfalls Tetrafluorethylen liefern Vulkanisate mit befriedigenden mechanischen Eigenschaften und hoher Beständigkeit gegenüber Hitze, Öl, Ozon und Bestrahlung.

Wegen dieser Eigenschaften sind mit Fluorkautschuken Anwendungsgebiete erschlossen worden, in die bisher kein anderer Kautschuktyp eindringen konnte. Ein wesentlicher Nachteil bei den FKM ist jedoch ihre außerordentlich schlechte Tieftemperaturflexibilität. Die Glastemperaturen der handelsüblichen Fluorelastomeren auf VDF/HFP/TFE-Basis bewegen sich zwischen 0 und -20°C. Durch Änderung der Polymerzusammensetzung läßt sich die Glastemperatur nicht weiter erniedrigen. Die Anwendung der Perfluorvinylmethylether-Terpolymeren, die Glastemperaturen bis -30°C besitzen, wird durch den hohen Preis eingeschränkt.

Gleichzeitig stehen mit den Polyorganosiloxanen im Vergleich zu FKM preiswerte Produkte zur Verfügung, die eine extrem niedrige Glastemperatur (<-100°C) besitzen und deren Vulkanisate sich gleichzeitig durch gute Heißluftalterung sowie hohe Ozonbeständigkeit auszeichnen. Weniger gut sind die Zug- und Weiterreißfestigkeit sowie die Beständigkeit gegenüber aggressiven heißen Medien. Die teureren Fluorsilicone [Poly(methyl)(trifluorpropyl)siloxane] besitzen zwar verbesserte Tieftemperatureigenschaften ($T_g$= -68°C), ihre Beständigkeit in heißen, aggressiven Medien liegt aber deutlich unter der von FKM. Ziel vieler Bemühungen war deshalb die Kombination von Fluor- und Silicon-Kautschuken. Die naheliegende Kombination in Form eines simplen Blends scheitert jedoch an der Unverträglichkeit beider Polymerklassen.

Stand der Technik

In den letzten Jahren hat es dennoch viele Bemühungen gegeben, diesen beiden Polymerklassen zu kombinieren. Dabei wurde durchweg der Versuch gemacht, die beiden Elastomere zu vermischen und cozuvulkanisieren. Selbst wenn dabei ein für beide Systeme anwendbares Vernetzungssystem gewählt wurde, resultierten daraus keine verkaufsfähigen Produkte.

Die FR-A1 451 719 beschreibt Fluorkautschuk/Siliconkautschuk-Mischungen mit einem Silicongehalt <15 %. Hierbei werden die beiden Polymeren nebeneinander vulkanisiert. Die Vulkanisation des Fluorkautschuks erfolgt bisaminisch, die des Siliconkautschuks peroxidisch. Eine Covulkanisation findet dabei nicht statt. Dies führt zu schlechten Vulkanisateigenschaften.

Die US-A 3 415 900 beschreibt die peroxidische Covulkanisation von chlorhaltigen Fluorelastomeren und Siliconen.

In US-A 3 538 028 werden im Verarbeitungsverhalten verbesserte FKM/VQM-Mischungen mit einem Siliconanteil von <15 % beschrieben. Dies wird durch Zugabe eines flüssigen Fluorpolymers zur Mischung erreicht. Die Fluorpolymere werden hier wieder bisaminisch vernetzt, während die Siliconphase peroxidisch vulkanisiert wird.

EP-A 270 028 beschreibt peroxidische Vulkanisate zur Herstellung von Gummistopfen, die aus funktionalisierten Fluorkautschuken und funktionalisierten Siliconen hergestellt werden.

US-A 3 865 897 beschreibt die Herstellung von Blends aus vinylhaltigem Polydimethylsiloxan und Vinylpolymeren, darunter auch Tetrafluorethylen/Ethylen-Copolymeren. Die Materialien sollen für Isolierzwecke eingesetzt werden.

Die DE-A 21 41 879 beschreibt die peroxidische Covulkanisation von Silicon- und Fluorkautschuken bei gleichzeitiger Anbindung an Metalloberflächen.

US-A 3 969 308 beschreibt peroxidisch vulkanisierbare Mischungen von Silicon- und Vinyl(auch Fluor)polymeren, wobei als Besonderheit hervorgehoben wird, daß ein silanisierter Füllstoff zuerst mit dem Siliconpolymeren vermischt wird.

US-A 4 028 431 beschreibt ebenfalls peroxidisch vulkanisierbare Mischungen von Fluorkautschuken mit Siliconen. Mit zunehmendem Siliconanteil zeigen die Vulkanisate zwar immer bessere Tieftemperatureigenschaften, die mechanischen Eigenschaften verschlechtern sich aber.

Die DE-A 25 19 964 beschreibt peroxidisch vulkanisierbare Mischungen von Fluorkautschuken, speziell Ethylen/Hexafluorpropen/Tetrafluorethylen-Terpolymeren, mit Siliconen.

US-A 4 260 698 beschreibt peroxidisch vulkanisierbare Blends von iodhaltigen Fluorkautschuken und (Fluor)Siliconkautschuken.

US-A 4 263 414 und WO 81/0073 beschreiben die peroxidische Covernetzung von Brom-Cure-Sites enthaltenden Fluorkautschuken mit Fluorsiliconen. Auch hier wird die Verbesserung der Tieftemperatureigenschaften durch eine Verschlechterung der mechanischen Eigenschaften erkauft. In US-A 4 450 263 wird dieser Weg weiter verfolgt.

WO 82/00606 beschreibt Fluorelastomerfilme, die mit Hilfe von Epoxy- bzw. Amino-substituierten Silanen vernetzt werden.

In US-A 4 810 577 werden peroxidisch vulkanisierbare Mischungen von Fluorpolymeren mit Siliconen für Kabelisolierungen beschrieben.

In US-A 4 904 529 werden Hitze- und Öl-beständige peroxidisch vulkanisierbare Mischungen von AFLAS (TEE/ Propen-Copolymer) und Silicon beschrieben, die für Isolierzwecke verwendet werden.

EP-A 279 414 beschreibt Mischungen von Silicon- und organischen, darunter auch Fluorpolymeren. Die Vernetzung der Siliconphase erfolgt dabei Pt-katalysiert, die der Fluorkautschukphase peroxidisch.

EP-A 295 717 beschreibt peroxidisch oder ionisch vulkanisierbare Mischungen, basierend auf Fluorelastomeren und modifizierten olefinischen Polymeren, wobei das Fluorelastomer auch ein Fluorsilicon sein kann.

EP-A 344 481 beschreibt die Beschichtung von Follen mit einem Fluorelastomer/Silicon-Covulkanisat, wobei die Vulkanisation bisphenolisch erfolgt.

EP-A 365 967 beschreibt Mischungen aus Fluorkautschuken (VITON E 430, DAIEL G 901) mit teilchenförmig vernetzten Siliconkautschuken. Die Vernetzung der Siliconkautschukteilchen kann Pt-katalysiert, Sn-katalysiert oder peroxidisch erfolgen.

EP-A 380 104 beschreibt peroxidisch vulkanisierbare Mischungen aus Fluor- und Siliconkautschuken. Durch Zugabe von Epoxy-substituiertem Silicon wird eine verbesserte Verarbeitbarkeit erreicht.

Die DE-A 29 49 135 beschreibt peroxidisch vulkanisierbare Mischungen von iodhaltigen Fluorelastomeren und (Fluor)siliconelastomeren.

US-A 4 942 202 beschreibt Dreikomponenten-Kautschukmischungen mit guter Verarbeitbarkeit auf der Walze. Die Komponente I soll z.B. ein Fluorsilicon sein, die Komponente II ist nicht mit dem Siliconkautschuk vernetzbar, bildet jedoch die kontinuierliche Phase, die Komponente II stellt einen mit I covernetzbaren Fluor- oder Acrylatkautschuk dar (VITON GF, Daiel G 902, JSR AR 101).

Bei allen bisher bekannten FKM/VQM-Mischungen treten zwei Hauptprobleme auf, deren Lösung Gegenstand der vorliegenden Anmeldung ist:

1. Prinzipiell sind die beiden Kautschuktypen völlig unverträglich.

2. Die Covernetzung ist sehr inhomogen, weil die beiden Polymerklassen unterschiedliches Vernetzungsverhalten aufweisen und die Vernetzung deshalb bevorzugt innerhalb der reinen Phasen A und B stattfindet. Die Covulkanisation findet nur in untergeordnetem Maße statt.

Aufgabe der vorliegenden Erfindung ist es, durch chemische Verknüpfung von Fluorkautschuken und Polydiorganosiloxan-Oligo- und/oder -Polymeren auf molekularer Ebene angekoppelte Kombinationen auf FKM und MQ herzustellen, die eine homogene Polymerphase bilden und sich durch einen scharfen einheitlichen Glasübergang auszeichnen, der zwischen dem der ursprünglich reinen FKM- und Siliconkomponente liegt.

Diese Aufgabe wird erfindungsgemäß dadurch gelöst, daß 98 bis 80 Gew.% Fluorkautschuke, die seitenständige olefinische Doppelbindungen, wie in der nachfolgenden Formel I dargestellt, enthalten, mit 2 bis 20 Gew.-% Polyorgano-H-siloxanoligo- oder Polymeren, umgesetzt werden.

$$\text{F-Polymer-X-CH=CH}_2 \qquad\qquad (I)$$

Diese aus der Siliconchemie bekannte Si-H-Addition an eine endständige C,C-Doppelbindung wird thermisch, radikalisch und/oder durch Edelmetallkomplexkatalyse in Lösung oder Substanz analog nachstehendem Schema durchgeführt:

$$\text{P-X-CH=CH}_2 + \text{-Si-H} \rightarrow \text{P-X-CH}_2\text{-CH}_2\text{-Si-}$$

Vulkanisierte Formkörper werden entweder in einem Schritt hergestellt, wobei die Si-H-Addition selbst zum Aufbau des Netzwerkes genutzt wird, oder im Anschluß an die Si-H-Addition, die in diesem Fall nur bis zu Fluorkautschuken mit Silicon-pfropfästen geführt wird, denen dann noch ein für den Fluorkautschuk geeignetes Vernetzungssystem zugemischt wird.

Geeignet sind Fluorkautschuke mit seitenständigen Doppelbindungen, hergestellt durch Copolymerisation von Fluormonomeren mit kleinen Mengen von geeigneten Monomeren, die mindestens zwei olefinische Doppelbindungen besitzen, wie Alkenylisocyanurate, Alkenylcyanurate und/oder nichtkonjugierte Diene; siehe DE-A 4 038 588 sowie die nicht vorveröffentlichte DE-A 4 114 598. Sie müssen fließfähig sein und dürfen daher nicht im vernetzten Zustand vorliegen, d.h. sie dürfen Gelgehalte von nicht mehr als 10 Gew.-% aufweisen.

Unter den Polyorgano-H-Siloxanen, die zur Pfropfung von ungesättigte Gruppen enthaltenden Fluorkautschuken herangezogen werden können, sind beispielsweise solche zu verstehen, die je Molekül mindestens eine Si-HGruppe aufweisen und Copolymere mit Einheiten der durchschnittlichen Formeln II und III sein sollen.

$$(R)_a SiO_{(4-a)/2} \quad (II) \qquad H_b (R)_a SiO_{(4-a-b)/2} \quad (III)$$

R bedeutet gleiche oder verschiedene, von aliphatisch ungesättigten Bindungen freie, einwertige Kohlenwasserstoffreste. Vorzugsweise sind alle Reste R Methylreste.

a kann einen Wert von 0 bis 2,5 annehmen; b kann einen Wert von 0,0005 bis 1 annehmen. Derartige Copolymere setzen sich im allgemeinen aus 50 bis 99.9999 mol-% Einheiten von (II) und 0.0001 bis 50 mol-% von (III) zusammen.

Diese Polyorgano-H-siloxane weisen eine Viskosität im Bereich von 10 bis 10 000 mPas/25°C, bevorzugt von 50 bis 1 000 000 mPas/25°C auf.

Die Si-H-Gruppe soll bevorzugt endständig, kann aber auch entlang der Kette angeordnet sein.

Beispiele für Polyorgano-H-Siloxane der Formel (III) sind 1-Hydrido-1,1,3,3,3-pentamethyldisiloxan, 1-Hydrido-1,1,3,3,4,4,4-octamethyldisiloxan sowie Homologe davon.

Die Polyorgano-H-Siloxane, die zur Pfropfung und/oder gleichzeitig zur Vernetzung von ungesättigte Gruppen enthaltenden Fluorkautschuken herangezogen werden können, sollen Copolymere aus Einheiten der Formeln (II) und (III) sein.

$$(R)_c (H)_d SiO_{(4-c-d)/2} \qquad (IV)$$

R ist identisch mit den Resten R in Formel II und III. c kann die Werte 0, 1 oder 2 annehmen und die Summe c + d muß 1, 2 oder 3 sein.

Derartige Copolymere enthalten im allgemeinen 50 bis 99,99 mol-% Einheiten von (II) und 0,0001 bis 50 mol-% Einheiten von (III). Die Polyorgano-H-Siloxane haben eine Viskosität von 10 bis 1 000 000 mPas/25°C. Beispiele für solche Polyorgano-H-Siloxane der Formel (IV) sind 1,3-Dimethyldisiloxan, 1,1,3,3-Tetramethyldisiloxan und Homologe davon.

Als geeignete Katalysatoren für die Si-H-Addition an C,C-Doppelbindungen können generell die von Lukevics [Russ. Chem. Rev. 46, 246 (1977)] beschriebenen Edelmetallkatalysatoren verwendet werden.

Geeignete Katalysatoren für die Addition von Si-gebundenem Wasserstoff an endständige C,C-Doppelbindungen sind insbesondere Platinkatalysatoren, die bisher für die Herstellung von zu Elastomeren härtbaren Massen mit Vinylgruppen aufweisenden Organopolysiloxanen eingesetzt wurden. Darunter sind Platinverbindungen wie Hexachloroplatinsäure, Platinkomplexe, Platin-Olefin-Komplexe, Platin-Alkohol-Komplexe, Platin-Ether-Komplexe, Platin-Aldehyd-Komplexe, Platin-Vinylsiloxan-Komplexe, Platin auf Trägem, wie Kieselgel oder Kohlepulver, zu verstehen.

Bevorzugt eingesetzt werden Platinkatalysatoren wie Hexachloroplatinsäure und Platin-1,3-Divinyl-1,1,3,3-tetramethyldisiloxan-Komplexe. Der Platinkatalysator wird in Mengen von 0,5 bis 1 000 ppm, berechnet als elementares Platin und bezogen auf das Gesamtgewicht der Organopolysiloxane und Fluorpolymere eingesetzt.

Die Addition von Si-H-Gruppen an endständige C,C-Doppelbindungen kann auch peroxidisch erfolgen. Dafür geeignete Peroxide sind unter anderem Dibenzoylperoxid, N,N'-azobisisobutyronitril, t-Butylperacetat, Di-t-butylperoxid, Methylamylketonperoxid.

Die Herstellung einer Fluorkautschuk/Siliconkautschuk-Mischung mit anschließender Si-H-Addition an Vinylgruppen kann in Substanz, Lösung oder Emulsion erfolgen. Zur Herstellung der Mischung in Substanz arbeitet man vorzugsweise mit Kneter-Aggregaten oder mit Walzwerken. Die Durchführung der Reaktion in Lösung geschieht vorzugsweise in Lösungsmitteln, in welchen beide Substanzklassen gelöst werden können, wie z.B. Dimethylformamid oder Dimethylacetamid.

<u>Beispiele</u>

<u>1. Herstellung der Fluorpolymeren mit seitenständigen Doppelbindungen</u>

Beispiel 1 A

In einem 6 1-Autoklaven wurden 2 500 ml entionisiertes Wasser vorgelegt. Darin wurden 9 g Lithiumperfluoroctansulfonat und 15 g Kaliumperoxidisulfat gelöst. Diese Lösung zeigt einen pH-Wert von 11. Dann wurde der geschlossene Autoklav dreimal jeweils mit einem Stickstoffdruck von 10 bar beaufschlagt und anschließend auf Normaldruck entspannt. In den Autoklaven wurden 640 g Hexafluorpropen und 486 g Vinylidenfluorid gegeben und das Reaktionsgemisch unter Rühren auf 50°C erwärmt. Nach Erreichen dieser Temperatur betrug der Autoklaveninnendruck 33 bar.

Die Polymerisation wurde eingeleitet durch die kontinuierliche Zugabe von 50 ml pro Stunde einer wässrigen Lösung, die 2 g Triethanolamin enthielt und in der zusätzlich 1,9 g Triallylisocyanurat dispergiert waren. Während der Polymerisation, die sich nach 17 min durch beginnende Druckabnahme bemerkbar machte, wurde zur Aufrechterhaltung des Anfangsdrucks innerhalb von 80 min ein Monomergemisch bestehend aus 180 g Vinylidenfluorid und 120 g Hexafluorpropen kontinuierlich nachgedrückt. Zur Beendigung der Polymerisation wurde der Autoklaveninhalt abgekühlt und das nicht umgesetzte Gasgemisch abgelüftet Es wurde eine koagulatfreie wäßrige Emulsion, die einen pH-Wert von 4,3 bei einem Feststoffgehalt von 13 % aufwies, erhalten. Diese Emulsion wurde zum Koagulieren des Produktes mit verdünnter Schwefelsäure auf einen pH-Wert von ca. 2 angesäuert und in 3 000 ml einer 4 %igen wäßrigen Magnesiumsulfatlösung gegossen. Das Produkt wurde mit Wasser gewaschen und dann getrocknet, wobei man 360 g eines kautschukartigen Copolymeren erhielt, das Vinylidenfluorid, Hexafluorpropen und Triallylisocyanurat enthält. Das Copolymer ist in Lösungsmitteln wie Dimethylformamid, Dimethylacetamid, Aceton, Methylethylketon und Tetrahydrofuran löslich; die Grenzviskosität beträgt 2,2 dl/g (DMF, 25°C). Das molare Verhältnis von Vinylidenfluorid zu Hexafluorpropen im Copolymeren wurde durch 19F-Kernresonanzspektroskopie bestimmt und beträgt 81:19. Mittels Stickstoffelementaranalyse wurde der Gehalt an einpolymerisiertem TAiC von 0,7 Gew.-% bestimmt. Das Vorhandensein freier Doppelbindungen ließ sich durch Addition von Iodbromid nachweisen. Die Iodzahl nach HANUS beträgt 2,0 g Iod/100 g Polymer. Der Mooneywert $ML_4$ (100°C) des Rohpolymeren beträgt 147.

Vulkanisation:

Auf einem Zweiwalzen-Gummimischwalzwerk wurde eine Mischung aus 100 Gew.-T1n. Fluorkautschuk mit 3Gew.-T1n. Calziumhydroxid, 30Gew.-Tln. Ruß MT Black N 990, 4 Gew.-Tln. Percalink 301-50 (Triallyliso-cyanurat, 50 %ig in inaktiven Füllstoffen) und 3 Gew.-Tln. Percadox 14/40 K [1,3-Bis-(t-butylperoxy-isopropyl)-benzol, 40 %igin inaktiven Füllstoffen] hergestellt. Diese Mischung wurde 20 min bei 180°C druckvulkanisiert. Danach folgte eine Nachvulkanisation durch stufenweises Aufheizen der Formkörper (100x100x1 mm-Preßplatten) in einem Umluftofen innerhalb von 4 h (Ih/160°C, 1h/170°C, 2h/180°C) auf 200°C und Temperung vor 20 Stunden bei dieser Temperatur.

Das resultierende Vulkanisat (100x100x1mm-Platten) besitzt folgende mechanische Eigenschaften:

| Härte | 77 Shore A, |
|---|---|
| Reißfestigkeit [N/mm²] | 24,5 N/mm², |
| und Reißdehnung | 340 %. |

Bei einer temperaturabhängigen Schubmodulmessung (Brabender Torsionsautomat) zeigt dieser vulkanisierte Fluorkautschuk einen Glasübergang bei -10°C.

Beispiel 1 B

Analog der im Beispiel 1 A beschriebenen Verfahrensweise wurden zur wäßrigen Vorlage 320 g HFP und 180 g VDF sowie 3 g TAiC und 1 g Perfluorbutyliodid gegeben und innerhalb von 14 h unter kontinuierlicher Zugabe von Triethanolamin mit einer Rate von 1,5 g/h ein Gemisch aus 200 g Hexafluorpropen und 300 g Vinylidenfluorid zur Aufrechterhaltung des Anfangsdrucks in den Autoklaven nachgedrückt. Gleichzeitig mit den Fluormonomeren wurde auf 100 Gew.-Teile F-Monomere eine Mischung aus 3,8 Gew.-Teilen TAiC, 0,08 Gew.-Teilen Perfluorbutyliodid und 2,6 Gew.-Teilen Essigsäuremethylester in den Autoklaven gepumpt.

Das resultierende Kautschukpolymer setzt sich aus 76,1 % VDF, 23,5 % HFP und 0,43 % TAiC zusammen (alle Angaben in Mol-%). Die Iodzahl nach HANUS beträgt 1,3 g Iod/100 g Polymer. Das Rohpolymere besitzt einen Mooneywert ML10 (100°C) von 94.

Beispiel 1 C

Analog der in 1 A beschriebenen Verfahrensweise wurden innerhalb von 4,5 h unter kontinuierlicher Zugabe von Triethanolamin mit einer Rate von 3,3 g/h und von Triallylcyanurat mit 1 g/h 153 g Hexafluorpropen und 126 g Vinylidenfluorid zur Aufrechterhaltung des Anfangsdrucks in den Autoklaven nachgeführt.

Das resultierende Kautschukpolymer setzt sich aus 80,8 % VDF, 18,9 % HFP und 0,2 % TAiC zusammen (alle Angaben in Mol-%). Das Copolymer ist in den unter 1 A aufgezählten Lösungsmitteln ebenfalls löslich; die Grenzviskosität beträgt 1.0 dl/g (DMF, 25°C). Die Iodzahl nach HANUS beträgt 1,0 g Iod/100 g Polymer.

2. Herstellung Polyorgano-H-Siloxanen

Beispiel 2 A

In einem 2-1-Rührkessel werden unter Schutzgas 17,37 g Tetramethyldisiloxan, 21,01 g Hexamethyldisiloxan und 961,61 g Octamethylcyclotetrasiloxan vorgelegt und mit 1,0 g Schwefelsäure und 0,5 g Perfluorbutansulfonsäure versetzt. Anschließend wird auf 70°C aufgeheizt und 4 Stunden bei 70°C gerührt. Nach Zugabe von 2,63 g Ammoniumcarbonat wird 30 Minuten nachgerührt und der pH-Wert der Gasphase geprüft. Wenn die Gasphase nicht basisch ist, werden nochmals 2,63 g Ammoniumcarbonat zugegeben und 30 Minuten gerührt Ist die Gasphae basisch, wird abgekühlt und mit 1 % Kieselgur filtriert. Das Filtrat wird bis 150°C bei einem Druck von ca. 1 mbar ausgeheizt.

3. Herstellung eines FKM/Polyorgano-H-Siloxan-Covulkanisats

Beispiel 3 A

In einem Haake Meßkneter mit Nockenrotoren (50 ml) wurden 40 g Fluorkautschuk aus Beispiel 1 C bei 120°C mit 2,7 g Polyorgano-H-Siloxan $[(CH_3)HSiO]_{30}$, Viskosität: 15 mPas/25°C, vermischt mit 2,7 g Ruß MT Black N 990, sowie 2,7 g Tetramethyltetravinylcyclotetrasiloxan, gemischt mit 2,7 g Ruß MT Black N 990 15 Minuten geknetet. Aus dem Produkt wurden Pressvulkanisate hergestellt (30 Minuten, 200 bar, 175 bis 180°C). Das Produkt war bei 25°C in Dimethylfomamid löslich. Der Glasübergang lag einheitlich bei -28,5°C (temperaturabhängige Schubmodulmessung mit Brabender Torsionsautomat).

Beispiel 3 B

In einem Haake Meßkneter mit Nockenrotoren (50 ml) wurden 40 g Fluorkautschuk aus Beispiel 1 C bei 120°C mit 2,7 g Polyorgano-H-Siloxan (siehe oben), gemischt mit 2,7 g Ruß MT Black N 990, vermischt. Anschließend wurden 2,7 g Platinkatalysator (370 ppm Pt), gemischt mit 2,7 g Ruß MT Black N 990, zugegeben und unter Abkühlung geknetet. Aus dem Produkt wurden Pressvulkanisate hergestellt (30 min, 200 bar, 175 bis 180°C). Das Produkt war in Dimethylformamid bei 100°C unlöslich. Der Glasübergang lag einheitlich bei -24°C (temperaturabhängige Schubmodulmessung mit Brabender Torsionsautomat).

4. Herstellung eines FKM/Polyorgano-H-Pfropfproduktes

Beispiel 4 A

In einem Haake Meßkneter (65 ml) wurden 85 g Fluorkautschuk aus Beispiel 1B 5 Minuten bei 40°C geknetet. Anschließend wurden 4 g Polyorgano-H-Siloxan der Zusammensetzung $[((CH_3)HSiO)_2O((CH_3)_2SiO)_2O]$ mit einer Viskosität von 40 mPas/25°C (Beispiel 2 A), gemischt mit 4 g VULKASIL S, dazugegeben und 5 Minuten bei 40°C geknetet. Danach wurde der Platinkatalysator (400pprn Pt) hinzugefügt und weitere 15 Minuten bei 40°C geknetet, wobei die Temperatur auf 80°C anstieg.

Beispiel 4 B

Auf einem Zweiwalzen-Gummimischwalzwerk wurde eine Mischung aus 100 Gew.-Teilen des nach Beispiel 3 A hergestellten mit Silikon modifizierten Fluorkautschuks mit 3 Gew.-Teilen Calziumhydroxid, 30 Gew.-Teilen Ruß MT Black N 990, 4 Gew.-Teilen Percalink 301-50 (Triallylisocyanurat, 50 %ig in inaktiven Füllstoffen) und 3 Gew.-Teilen Percadox 14/40 K (Fa. Akzo: 1,3-Bis-(t-butylperoxy-isopropyl)-benzol, 40 %ig in Kreide) hergestellt. Diese Mischungen wurden 20 Minuten bei 180°C druckvulkanisiert. Danach folgte eine Nachvulkanisation durch stufenweises Aufheizen der Formkörper (100x100x1 mm-Preßplatten) in einem Umluftofen innerhalb von 4 h (1 h/160°C, 1 h/170°C, 2 h/180°C) auf 200°C und Temperung von 20 Stunden bei dieser Temperatur.

Das resultierende Vulkanisat besitzt eine Härte (Shore A) von 69,8 und zeigt bei einer temperaturabhängigen Schubmodulmessung (Brabender Torsionsautomat) bei -13°C einen scharfen Glasübergang.

Beispiel 4 C (Vergleichsbeispiel)

Analog der im Beispiel 3 B beschriebenen Verfahrensweise wurde ein vulkanisierter Formkörper des reinen, nicht mit Silikon modifizierten Fluorkautschuks aus Beispiel 1B hergestellt. Der bei der temperaturabhängigen Schubmodulmessung sichtbar werdende Glasübergang liegtbei -6°C.

Beispiel 5

a) In einem Haake Meßkneter (65 ml) wurden 79 g Fluorkautschuk aus Beispiel 1 5 Minuten bei 40°C geknetet. Anschließend wurden 16,73 g Polyorgano-H-siloxan der Zusammensetzung $(CH_3HSiO)_{20}[(CH_3)_2SiO)_{20}$ mit einer Viskosität von 40 mPas/25°C, gemischt mit 8,37 g VULKASIL S, dazugegeben und 5 Minuten bei 40°C geknetet. Danach wurde der Platinkatalysator (400 ppm Pt) zugegeben und 15 Minuten bei 80°C geknetet.

b) Vulkanisationsmischung

50 Gew.-Teile des nach 5 a) hergestellten, mit Silikon modifizierten Fluorkautschuks wurden zunächst mit 50 Gew.-Teilen des Fluorkautschuks aus Beispiel 1 A auf einem Zweiwalzen-Gummimischwalzwerk gemischt. Aus dieser Kautschukmischung wurde anschließend nach der analogen, im Beispiel 3 B beschriebenen Verfahrensweise zu vulkanisierten Formkörpern verarbeitet. Das Vulkanisat wies eine Härte (Shore A) von 68, eine Zugfestigkeit von 20 MPa sowie eine Zugdehnung von 275 % auf. Bei der temperaturabhängigen Schubmodulmessung wurde ein Glasübergang bei -12°C gefunden. Der Glasübergang der analog vulkanisierten Mischung der reinen Fluorkautschuke aus Beispielen 1 A und 1 C liegt bei -7°C.

In Tabelle 1 sind die Eigenschaften der Vulkanisate aus den Beispielen 3 bis 5 gegenübergestellt.

Tabelle 1

| Glasübergangstemperaturen und mechanische Eigenschaften der Vulkanisate aus den Beispielen 3 bis 5 | | | |
|---|---|---|---|
| Meßgröße | Beispiel 3 | Beispiel 4 Vergleich | Beispiel 5 |
| Härte [Shore A] | 69,8 | 63 | 68 |
| Reißfestigkeit [N/mm$^2$] | 10,2 | 7,4 | 20 |
| Reißdehnung [%] | 340 | 405 | 275 |
| Glasübergangstemperatur [°C] | -13 | -6 | -12 |

**Patentansprüche**

1. Eine chemisch verknüpfbare Mischung, enthaltend

   (1) 98 bis 80 Gew.-% eines doppelbindungshaltigen Fluorelastomers mit seitenständigen, olefinischen Doppelbindungen,

   (2) 2 bis 20 Gew.-% mindestens einer der Si-H-Gruppen enthaltenden Siliconoligomere, Siliconelastomere, Fluorsiliconelastomere,

   (3) gegebenenfalls einen edelmetallhaltigen Katalysator und/oder ein organisches Peroxid

   (4) sowie gegebenenfalls Füllstoffe, Farbstoffe, Stabilisatoren.

2. Mischung nach Anspruch 1, dadurch gekennzeichnet, daß das Si-enthaltende Polymer (2) ein Si-gebundene Wasserstoffe aufweisendes Organopolysiloxan ist.

3. Verfahren zur Herstellung einer chemisch verknüpften Kombination aus der Mischung nach Anspruch 1 oder 2, dadurch gekennzeichnet, daß die Addition der Si-H-Funktion an die Doppelbindung thermisch, radikalisch oder durch Edelmetall-Komplex-Katalyse in Lösung oder Substanz erfolgt.

**Claims**

1. A chemically linkable mixture containing

   (1) 98 to 80 wt-% of a fluoroelastomer containing double bonds and having lateral olefinic double bonds,

(2) 2 to 20 wt-% of at least one of the silicone oligomers, silicone elastomers, fluorosilicone elastomers containing Si-H groups,

(3) optionally, a catalyst containing noble metal and/or an organic peroxide,

(4) as well as, optionally, fillers, dyestuffs, stabilisers.

2. Mixture according to Claim 1, characterised in that the polymer (2) containing Si is an organopolysiloxane comprising Si-bonded hydrogen atoms.

3. Process for producing a chemically linked combination from the mixture according to Claim 1 or 2, characterised in that addition of the Si-H function to the double bond is effected thermally, radically or by noble-metal-complex catalysis in solution or in bulk.

**Revendications**

1. Un mélange apte à une combinaison chimique, qui contient

   (1) 98 à 80 % en poids d'un élastomère fluoré contenant des doubles liaisons, avec des doubles liaisons oléfiniques latérales,
   (2) 2 à 20 % en poids d'au moins un oligomère de silicone, un élastomère de silicone, un élastomère de fluorosilicone contenant des groupes Si-H,
   (3) le cas échéant un catalyseur à base de métal noble et/ou un peroxyde organique,
   (4) et le cas échéant des matières de charge des colorants des stabilisants.

2. Mélange selon la revendication 1 caractérisé en ce que le polymère contenant Si (2) est un organopolysiloxane contenant de l'hydrogène lié au silicium.

3. Procédé de préparation d'une combinaison, liée chimiquement, àpartir du mélange selon la revendication 1 ou 2, caractérisé en ce que l'on provoque l'addition de la fonction Si-H sur la double liaison par la chaleur, des radicaux libres ou par catalyse à l'aide de complexes de métaux nobles, en solution ou en masse.